(19) Europäisches Patentamt
European Patent Office
Office européen des brevets

(11) Veröffentlichungsnummer : **0 513 658 A2**

(12) # EUROPÄISCHE PATENTANMELDUNG

(21) Anmeldenummer : **92107670.9**

(22) Anmeldetag : **06.05.92**

(51) Int. Cl.$^5$ : **C08L 71/10,** // (C08L71/10, 71:10, 67:03), (C08L71/10, 71:10, 69:00)

(30) Priorität : **14.05.91 DE 4115613**

(43) Veröffentlichungstag der Anmeldung : **19.11.92 Patentblatt 92/47**

(84) Benannte Vertragsstaaten : **BE CH DE FR GB IT LI NL SE**

(71) Anmelder : **HOECHST AKTIENGESELLSCHAFT**
**Postfach 80 03 20**
**W-6230 Frankfurt am Main 80 (DE)**

(72) Erfinder : **Falk, Uwe, Dr.**
**Am Taubertsberg 4**
**W-6500 Mainz (DE)**
Erfinder : **Herrmann-Schönherr, Otto, Dr.**
**Grafenstrasse 15**
**W-6140 Bensheim (DE)**

(54) **Legierungen auf Basis von Polyaryletherketonen.**

(57) Polymerlegierungen enthaltend (a) 60 bis 96 Gew.-% mindestens eines teilkristallinen Polyaryletherketons, (b) 35 bis 2 Gew.-°% mindestens eines amorphen Polyaryletherketons und (c) 35 bis 2 Gew.-% mindestens eines Polyarylesters, wobei die Staudingerindizes von (a), (b) und (c) jeweils 0,2 bis 2,0 dl/g betragen, werden hergestellt und können als Matrixmaterial für Verbundwerkstoffe oder zur Herstellung von Formkörpern verwendet werden.

EP 0 513 658 A2

Die Erfindung betrifft thermoplastisch verarbeitbare Legierungen aus teilkristallinen Polyaryletherketonen, amorphen Polyaryletherketonen und Polyarylestern und ihre Verwendung zur Herstellung von Formkörpern oder als Matrixmaterialien für Verbundwerkstoffe.

Teilkristalline Polyaryletherketone sind eine bekannte Klasse von Polymeren mit hohem Eigenschaftsniveau. Sie zeichnen sich unter anderem aus durch gute mechanische Eigenschaften, hohe thermische Beständigkeit und hydrolytische Stabilität (US-A-3,953,400; US-A-3,956,240; US-A-4,247,682; US-A-4,320,224; US-A-4,339,568; Polymer, 22 (1981), 1096-1103; Polymer 24 (1983), 953-958).

Aus nicht-vorveröffentlichten prioritätsälteren Patentanmeldungen (DE-A-4039924, DE-A-4103335) sind binäre Legierungen aus teilkristallinen und amorphen Polyaryletherketonen und ternäre Legierungen aus Polyaryletherketonen, Polyimiden und Polyarylestern bekannt.

Für einige Anwendungen, beispielsweise als Matrixmaterialien für Composites, sind die bisher erzielten Schmelzviskositäten der teilkristallinen Polyetherketone noch verbesserungsbedürftig.

Es ist bekannt, daß technologisch wichtige Eigenschaften von Polymeren, wie die oben genannten, eingestellt werden können, indem man Polymere mit anderen Polymeren legiert. Man ist bis heute jedoch weit davon entfernt, die Eigenschaften einer Legierung aus den Eigenschaften der Einzelkomponenten gesichert vorhersagen zu können. Daher bleibt das Legieren von Polymeren weitgehend empirisch.

Aufgabe der vorliegenden Erfindung ist es, Legierungen auf Basis von teilkristallinen Polyaryletherketonen mit verbesserter Schmelzeverarbeitbarkeit unter weitgehendem Erhalt der guten mechanischen Eigenschaften bereitzustellen.

Es wurde nun gefunden, daß die Aufgabe durch Legierungen aus teilkristallinen Polyetherketonen, amorphen Polyetherketonen und Polyarylestern gelöst werden kann.

Die Erfindung betrifft somit Polymerlegierungen enthaltend 3 Komponenten (a), (b) und (c), dadurch gekennzeichnet, daß (a) mindestens ein teilkristallines Polyaryletherketon, (b) mindestens ein amorphes Polyaryletherketon, und (c) mindestens ein Polyarylester ist, wobei der Staudingerindex von (a), (b) und (c) 0,2 bis 2,0 dl/g und der Anteil der Komponenten (a) 60 bis 96, (b) 35 bis 2 und (c) 35 bis 2 Gewichtsprozent beträgt, und sich die Anteile der Komponenten (a), (b) und (c) relativ in Bezug auf die Gesamtlegierung auf 100 Gew.-% ergänzen.

Die Anteile der Komponenten (a), (b) und (c) in der Legierung betragen vorzugsweise bei (a) 70 bis 90, insbesondere 75 bis 85 Gewichtsprozent, bei (b) 25 bis 5, insbesondere 20 bis 5 Gewichtsprozent, und bei (c) 25 bis 5, insbesondere 20 bis 5 Gewichtsprozent.

Die Legierungen gemäß der Erfindung enthalten als Komponente (a) teilkristalline Polyaryletherketone mit einer oder mehreren Wiederholeinheiten der folgenden Formeln:

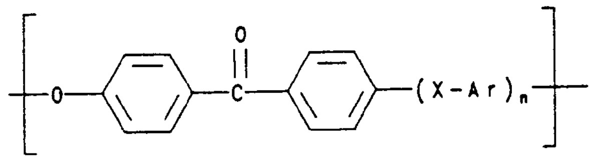

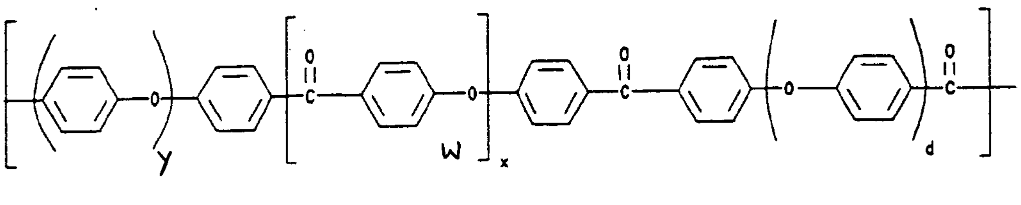

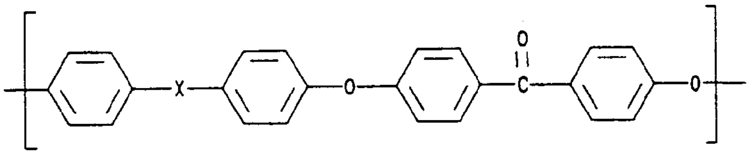

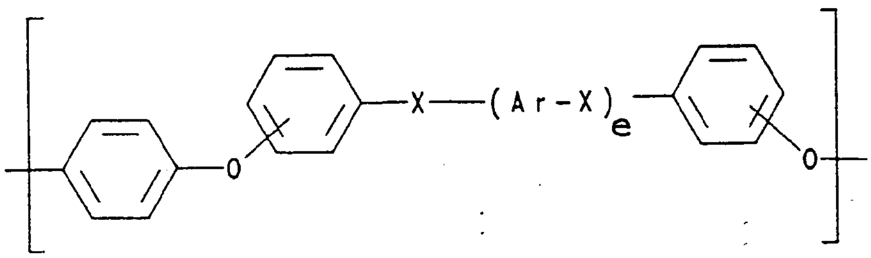

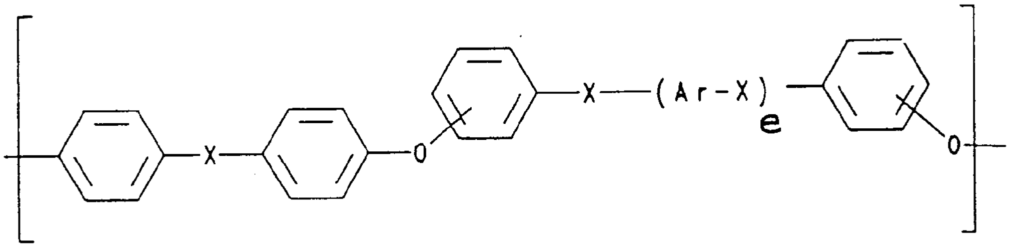

worin -Ar- einen zweiwertigen aromatischen Rest darstellt, ausgewählt aus Phenylen, Biphenylen oder Naphthylen, -X- für O, CO oder eine direkte Bindung steht, n eine ganze Zahl von Null bis 3 ist, w, x, d und e Null oder 1 sind und v eine ganze Zahl von 1 bis 4 ist, wobei d bevorzugt Null ist, falls b gleich 1 ist.

Bevorzugte Polyaryletherketone (a) weisen Wiederholeinheiten der folgenden Formeln auf:

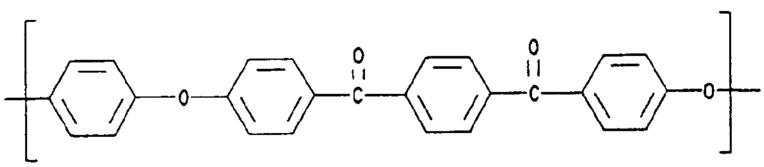

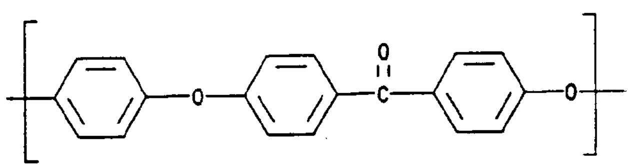

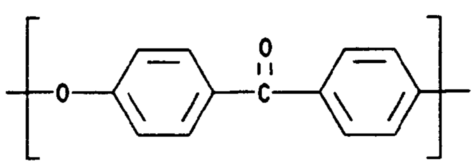

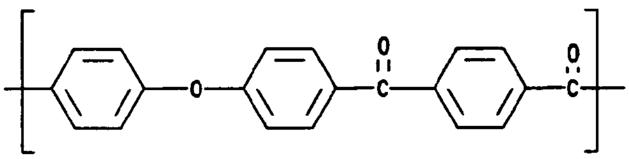

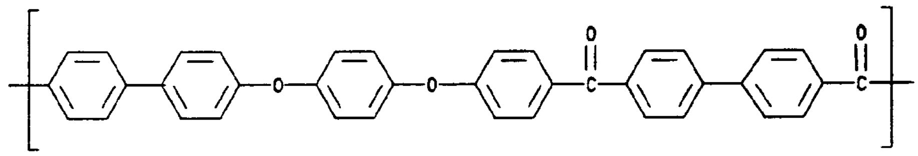

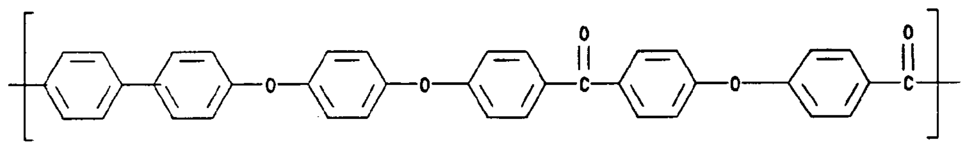

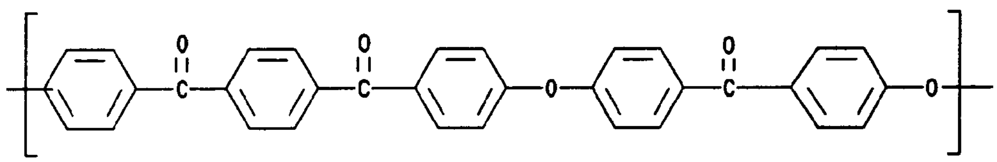

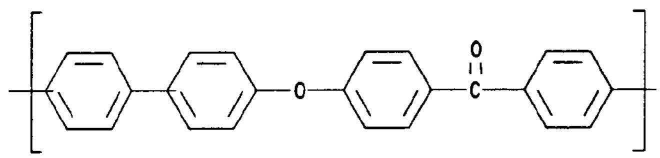

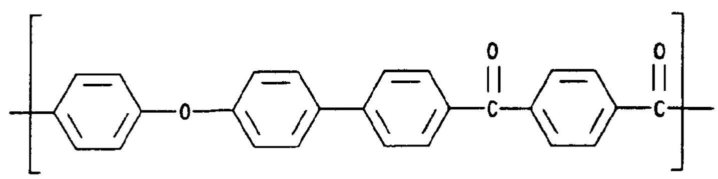

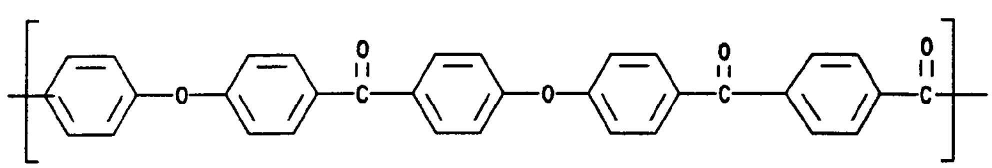

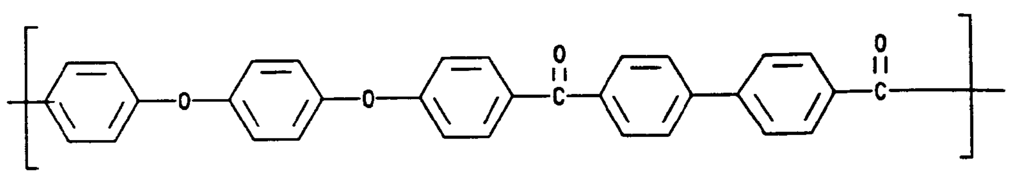

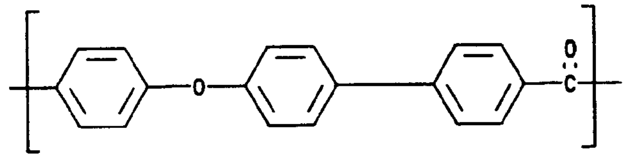

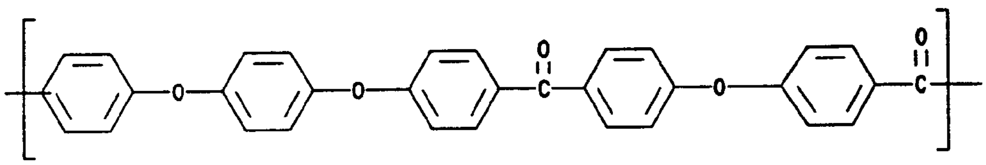

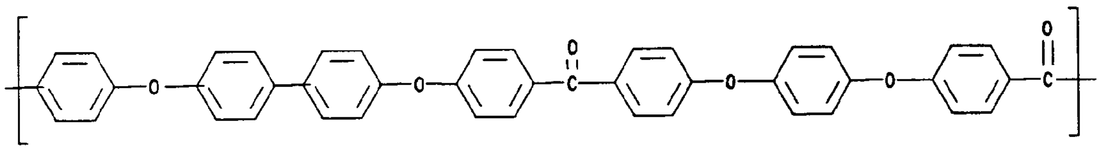

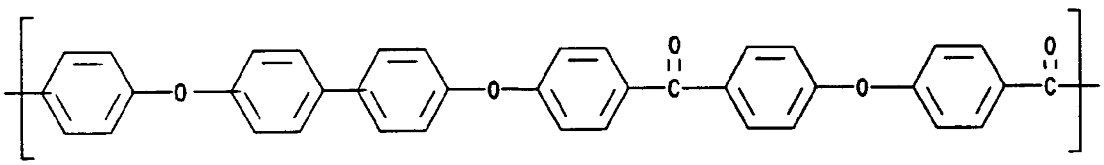

Diese teilkristallinen Polyaryletherketone können nach bekannten Methoden synthetisiert werden, die in CA-A-847,963; US-A-4,176,222; US-A-3,953,400; US-A-3,441,538; US-A-3,442,857; US-A-3,516,966; US-A-4,396,755; US-A-4,398,020 beschrieben sind.

Der Begriff teilkristalline Polyaryletherketone, wie er hier verwendet wird, schließt Homopolymere und Copolymere wie Terpolymere und Blockcopolymere ein.

Die teilkristallinen Polyaryletherketone haben vorzugsweise Staudingerindizes von 0,2 - 5,0 dl/g und insbesondere von 0,5 - 2,0 dl/g, gemessen in 96-prozentiger Schwefelsäure bei 25°C.

Amorphe Polyaryletherketone (b), die in den Legierungen gemäß der Erfindung eingesetzt werden können, weisen keinen Schmelzpunkt, sondern nur eine Glastemperatur auf und sind aus Wiederholeinheiten der Formel I aufgebaut

$$\left[ O\text{-}A\text{-}O\text{-}B \right] \qquad (I),$$

wobei -A- ausgewählt ist aus den Resten

A1

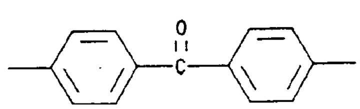

A2

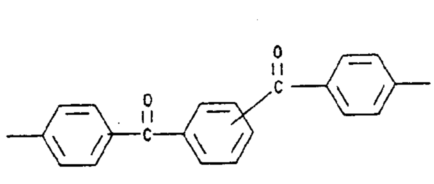

(meta- oder para-Substitution)

A3

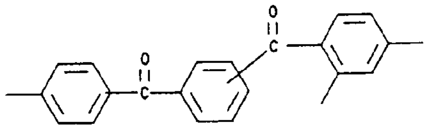

(meta- oder para-Substitution)

und -B- ausgewählt ist aus den Resten

B1

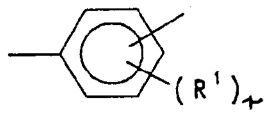

B2

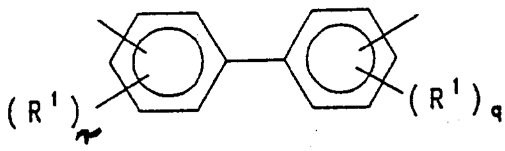

B3

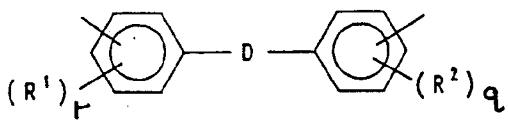

B4

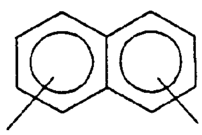

B5

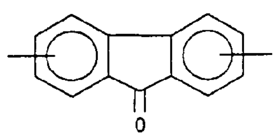

B6

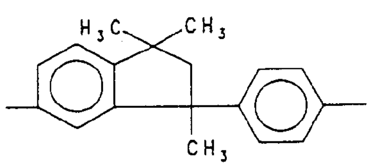

B7

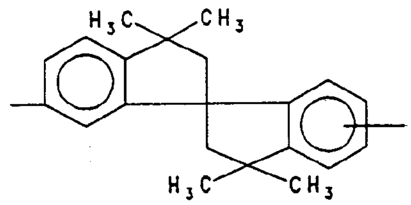

B8

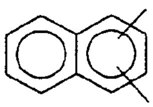

worin $R^1$ und $R^2$ gleich oder verschieden sind und Halogen wie F, Cl, Br oder J, vorzugsweise Brom, $C_1$-$C_8$-Alkyl oder $C_1$-$C_8$-Alkoxy, vorzugsweise $C_1$-$C_4$-Alkyl wie Methyl, Ethyl, die verschiedenen Isomeren des Propyls oder Butyls, oder $C_1$-$C_4$-Alkoxy, wie Methoxy, Ethoxy, die verschiedenen Propoxy- oder Butoxyreste, darstellen, q und r gleich oder verschieden sind und Null oder eine ganze Zahl von 1 bis 4, vorzugsweise Null, 1 oder 2, insbesondere Null oder 2 bedeuten und D ausgewählt ist aus den zweiwertigen Resten:

D1 -O-,
D2 $>C = 0$
D3 $-CH_2-$,
D4 $-C(CH_3)_2-$,
D5 $-C(CF_3)_2-$,
D6

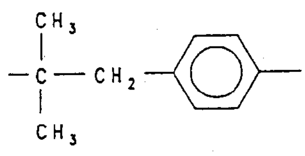

D7

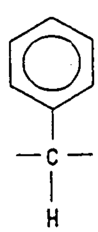

D8

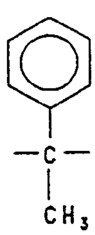

D9

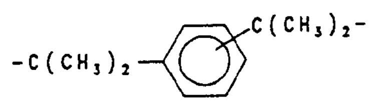

(meta- oder para-Substitution)

D10

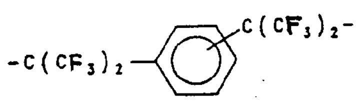

(meta- oder para-Substitution)

Stellen $R^1$ und $R^2$ in den Resten B2 und B3 Halogen dar, sind q und r vorzugsweise 2.

Das molare Verhältnis der Einheiten -A- zu -B- beträgt 0,95 bis 1,05 zu 1,0, vorzugsweise 1:1.

Die amorphen Polyaryletherketone (b) können nach bekannten Methoden synthetisiert werden. Einige sind in High Performance Polymers, Vol. I (1), 41 ff (1989) und in Polymer 29, 358 ff (1988) beschrieben.

Die amorphen Polyaryletherketone (b) können Homopolymere sein, die also nur eine Einheit vom Typ -A- und eine Einheit vom Typ -B- je wiederkehrende Einheit enthalten, oder Copolykondensate, welche zwei oder mehrere verschiedene Einheiten vom Typ -A- und/oder zwei oder mehrere verschiedene Einheitem vom Typ -B- enthalten.

-A- wird bevorzugt ausgewählt aus A1 und A2 und besonders bevorzugt ist A2. -B- wird bevorzugt ausgewählt aus B1, B2 und B3, besonders bevorzugt ist B3. -D- ist vorzugsweise D2, D3, D4, D5, D6, D7, D8, D9 und/oder D10, vorzugsweise verknüpft in para-Stellung. Besonders bevorzugt sind D4, D5, D9 und/oder D10.

Ist -A- ausgewählt worden aus A1 und A2, so stellt -B- nicht B4 dar. Falls -B- gleich B3 und n gleich Null ist, werden D1 oder D2 nicht ausgewählt.

Ist in der Struktureinheit (I) -A- gleich A3, so ist -B- bevorzugt B1 oder B2 und n gleich Null, 1 oder 2, insbesondere Null.

Die amorphen Polyaryletherketone haben vorzugsweise Staudingerindizes, gemessen bei 25°C in Chloroform, N-Methylpyrrolidon oder N,N-Dimethylacetamid, von 0,3 bis 1,0 dl/g und insbesondere von 0,3 bis 0,6 dl/g.

Die Polyarylester (c) enthalten Struktureinheiten, die abgeleitet sind von mindestens einer Dihydroxyarylverbindung der allgemeinen Formel II

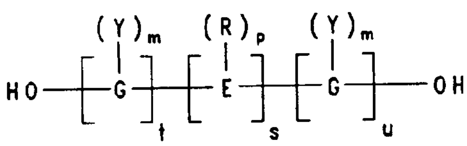

(II)

und mindestens einer Dicarbonsäureverbindung oder deren reaktive Derivate der allgemeinen Formel III

HOOC - R'' - COOH (III)

worin die Symbole folgende Bedeutung haben:

| | |
|---|---|
| -G- = | aromatische Gruppe wie Phenylen, Biphenylen und Naphthylen |
| -E- = | Alkylen wie Methylen und Ethylen, Alkyliden beispielsweise Isopropyliden, eine cycloaliphatische Gruppe, eine Sulfidgruppe, eine Sulfoxidgruppe, eine Sulfongruppe, eine Ethergruppe, eine Carbonylgruppe oder zwei oder mehrere Alkylen- oder Alkylidengruppen verbunden durch eine Gruppe, die weder Alkylen noch Alkyliden ist, beispielsweise einer aromatischen Gruppe, einer tertiären Aminogruppe, einer Carbonylgruppe, einer Sulfidgruppe, einer Sulfoxidgruppe, einer Sulfonylgruppe oder einer Ethergruppe, |
| -R- = | Wasserstoff, $C_1$-$C_4$-Alkyl beispielsweise Methyl, Ethyl oder Isopropyl, $C_6$-$C_{12}$-Aryl oder eine cycloaliphatische Gruppe |
| -Y = | -R, Halogen oder $-NO_2$ |
| s,t,u = | unabhängig voneinander Null oder 1, wobei die Summe aus s, t und u größer Null ist |
| m,p = | unabhängig voneinander Null oder eine ganze Zahl, die so groß ist wie die maximal mögliche Zahl |

-R″ der Substituenten, die A oder E tragen können,

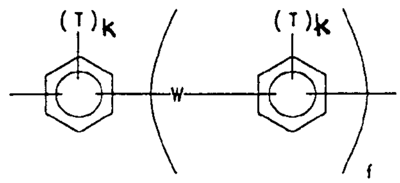

oder

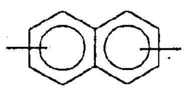 oder 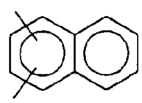

f = Null oder 1

-W- = -O-, $-SO_2-$, -CO-, $-C(CH_3)_2-$, $-CH_2-$, -S- oder

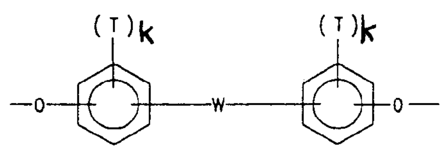

-T = $C_1$-$C_6$-Alkyl, vorzugsweise Methyl, Propyl oder Butyl, oder Halogen, vorzugsweise F, Cl, Br

k = Null oder 1, 2, 3 oder 4.

Falls t und u Null sind, dann steht E für zwei oder mehrere Alkylen- oder Alkylidengruppen, verbunden durch eine aromatische Gruppe.

Wenn mehrere der mit Y bezeichneten Substituenten vorhanden sind, dann können diese gleich oder verschieden sein. Dasselbe gilt für R. Die Hydroxylgruppen und die Substituenten Y an den aromatischen Resten können para-, meta- oder orthoverknüpft sein.

Unter den Struktureinheiten die von mindestens einer Dihydroxyarylverbindung der Formel IIa

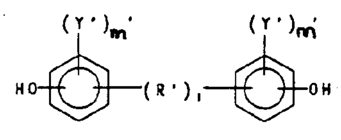 (IIa)

abgeleitet sind, sind solche bevorzugt, worin -Y′ $C_1$-$C_4$-Alkyl wie Methyl, Ethyl oder Isopropyl, $C_6$-$C_{12}$-Cycloalkyl oder Halogen, vorzugsweise Chlor oder Fluor bedeutet, m′ unabhängig voneinander eine ganze Zahl Null, 1, 2, 3 oder 4, vorzugsweise Null, ist, -R′- Alkylen oder Alkyliden mit 1 bis 9, vorzugsweise 1 bis 4 C-Atomen wie Methylen, Ethyliden oder Isopropyliden, insbesondere Alkyliden mit 3 C-Atomen ist und der Index I Null oder 1 bedeutet.

Die Polyarylester (c) können auch Struktureinheiten enthalten, die von zwei oder mehr verschiedenen Dihydroxyarylverbindungen abgeleitet sind.

Unter den Struktureinheiten, die von mindestens einer aromatischen Dicarbonsäureverbindung abgeleitet sind, sind solche bevorzugt, die von Isophthalsäure, Terephthalsäure sowie deren Mischungen oder deren reaktiven Derivaten wie Terephthalsäuredichlorid, Isophthalsäuredichlorid oder deren Mischungen, abgeleitet sind.

Die Polyarylester (c) können hergestellt werden durch eine der gut bekannten Polyester bildenden Reaktionen, beispielsweise durch Reaktion von Säurechloriden aromatischer Dicarbonsäuren mit Dihydroxyarylverbindungen oder durch Reaktion von aromatischen Disäuren mit Diesterderivaten von Dihydroxyarylverbindungen oder durch Reaktion von Dihydroxyarylverbindungen mit aromatischen Dicarbonsäuren und Diarylcarbonaten. Solche Reaktionen sind beispielsweise in US-A-3,317,464; US-A-3,395,119; US-A-3,948,856; US-A-3,780,148; US-A-3,824,213 oder US-A-3,133,898 beschrieben.

Die Polyarylester (c) können auch Polyestercarbonate sein, deren Synthesen beispielsweise in US-A-3,030,331; US-A-3,169,121; US-A-4,194,038 und in US-A-4,156,069 beschrieben sind. Polyestercarbonate sind Copolyester, die neben den Struktureinheiten abgeleitet von Dihydroxyarylverbindungen der Formel II und aromatischen Dicarbonsäureverbindungen der Formel III weitere Struktureinheiten abgeleitet von Carbonatprecursoren enthalten, wobei wenigstens einige der Carboxylgruppen und wenigstens einige der Carbonatgruppen direkt mit den Ringkohlenstoffatomen verbunden sind.

Diese Polyestercarbonate werden üblicherweise hergestellt durch Reaktion von Dicarbonsäuren gemäß Formel III mit Dihydroxyarylverbindungen gemäß Formel II und Carbonatprecursoren. Zur Synthese der Polyestercarbonate verwendbare Carbonatprecursoren sind Carbonylhalogenide, beispielsweise Phosgen oder Carbonylbromide und Carbonatester, beispielsweise Diphenylcarbonat.

Die Polyarylester (c) sind bekanntermaßen thermisch weniger belastbar als die Komponenten (a) und (b) der Legierungen gemäß der Erfindung. Daher sind niedrige Gewichtsanteile an Polyarylestern bei denjenigen Legierungen zu bevorzugen, die Polyaryletherketone (a) mit besonders hohen Schmelzpunkten, zum Beispiel dasjenige mit den folgenden Wiederholungseinheiten

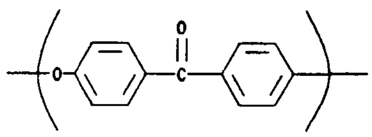

enthalten.

Da jedoch die beschriebenen Polyestercarbonate thermisch belastbarer als die übrigen beschriebenen Polyarylester sind, werden diese Polyestercarbonate als bevorzugte Polyarylester (c) mit den zuvor genannten Polyaryletherketonen mit besonders hohen Schmelzpunkten für die Herstellung von Legierungen gemäß der Erfindung eingesetzt.

Die verwendeten Polyarylester bzw. Polyestercarbonate besitzen vorzugsweise Staudingerindices von 0,3 bis 1,5 dl/g und insbesondere von 0,3 bis 1,0 dl/g, gemessen bei 25°C in p-Chlorphenol, Methylenchlorid oder N-Methylpyrrolidon. Der Begriff Polyarylester, wie er hier verwendet wird, schließt Homopolymere und Copolymere wie Bi-, Ter- oder Multipolymere oder Blockcopolymere, ein.

Die Legierungen gemäß der Erfindung werden hergestellt durch bekannte Legierungsmethoden. Beispielsweise werden die Legierungspartner in Form von Pulver oder Granulat gemeinsam in einem Extruder zu Strängen extrudiert und die Stränge zu Granulat zerhackt und dieses in die gewünschte Form beispielsweise durch Pressen oder Spritzgießen gebracht.

Die Legierungen gemäß der Erfindung können Additive enthalten, beispielsweise Plastifizierer, thermische Stabilisatoren, UV-Stabilisatoren, Schlagzähmodifizierer oder verstärkende Zusätze wie Glas-, Kohle- oder Hochmodulfasern, beispielsweise Polyaramidfasern.

Die Legierungen gemäß der Erfindung können insbesondere vorteilhaft als Matrixmaterialien für Verbundwerkstoffe eingesetzt werden, da sie eine gute Fließfähigkeit aufweisen. Die Legierungen eignen sich ferner zur Herstellung von Formkörpern nach dem Spritzguß- oder Extrusionsverfahren, beispielsweise in Form von Fasern, Folien und Schläuchen.

Es wurden folgende Polymere nach Standardmethoden hergestellt:

Teilkristalline Polyaryletherketone I (PEK I) und II (PEK II) enthaltend Wiederholeinheiten der folgenden Formel

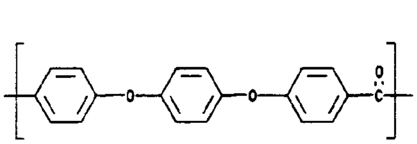

wobei der Melt Flow Index (MFI) von PEK I 5 g/10 min und von PEK II 10 g/10 min, jeweils gemessen bei 360°C, beträgt.

Teilkristalline Polyaryletherketone III (PEK III) und IV (PEK IV) enthaltend Wiederholeinheiten der folgenden Formel

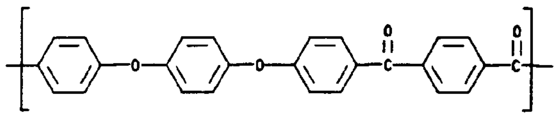

wobei der MFI von PEK III 5 g/10 min und von PEK IV 40 g/10 min, jeweils gemessen bei 400°C, beträgt.

Amorphes Polyaryletherketon V (PEK V) mit einem Staudingerindex von 0,5 dl/g, gemessen in Chloroform bei 25°C, enthaltend Wiederholeinheiten der folgenden Formel

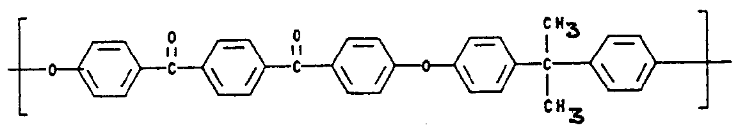

Polyarylester I (PAE I) mit einem Staudingerindex von 0,5 dl/g, gemessen in Methylenchlorid bei 25°C, enthaltend Wiederholeinheiten der folgenden Formel

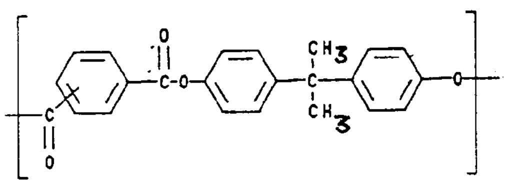

worin das Verhältnis von Terephthaloyl- zu Isophthaloylresten 1:1 beträgt.

Polyarylester II (PAE II) mit einem Staudingerindex von 0,7 dl/g, gemessen in p-Chlorphenol bei 25°C, enthaltend Wiederholeinheiten der folgenden Formel

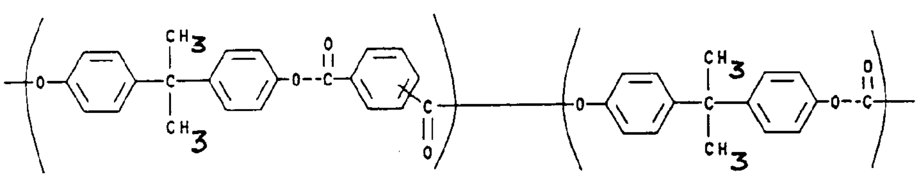

worin das Verhältnis von Terephthaloyl- zu Isophthaloyleinheiten 1:1 und das Verhältnis von Ester- zu Carbonateinheiten 2:1 beträgt.

Die angeführten Polymere wurden zunächst getrocknet (140°C, 24 h, Vakuum) und anschließend in verschiedenen Gewichtsverhältnissen gemeinsam in einem Meßextruder (Fa. HAAKE, Karlsruhe, Rheocord System 90 Rheomex TW 100) unter Schutzgas (Argon) zu Strängen oder Folien extrudiert. Zu Messungen der Fließfähigkeiten wurde ein Schmelzindex-Prüfgerät MPS-D der Fa. Goettfert, Buchen, verwendet. Zur Bestimmung mechanischer Eigenschaften wurde eine Zug-Dehnungs-Gerät der Firma Instron, Offenbach, und ein Schlagpendel-Prüfgerät der Fa. Zwick, Nürnberg, eingesetzt.

Beispiel 1:

Im Meßextruder wurden unter Inertgas (Argon) das teilkristalline Polyaryletherketon I, das amorphe Polyaryletherketon V und der Polyarylester II in unterschiedlichen Gewichtsverhältnissen gemeinsam zu Strängen extrudiert und granuliert. Die erhaltenen Granulate wurden nach Trocknung für MFI-Messungen verwendet. Tabelle 1 zeigt, daß die Fließfähigkeiten (MFI bei 360°C) der Legierungen denen des teilkristallinen Polyaryletherketones allein überlegen sind.

Tabelle 1: Fließfähigkeiten

| PEK I [Gew.%] | PEK V [Gew.%] | PAE II [Gew.%] | MFI [g/10 min] |
|---|---|---|---|
| 100 | 0 | 0 | 5 |
| 80 | 10 | 10 | 21 |
| 70 | 15 | 15 | 27 |
| 60 | 10 | 30 | 30 |
| 60 | 30 | 10 | 37 |

Beispiel 2:

Im Meßextruder wurden unter Inertgas (Argon) das teilkristalline Polyaryletherketon II, das amorphe Polyaryletherketon V und der Polyarylester I in unterschiedlichen Gewichtsverhältnissen gemeinsam zu Strängen extrudiert und granuliert. Die erhaltenen Granulate wurden nach Trocknung für MFI-Messungen verwendet. Tabelle 2 zeigt, daß die Fließfähigkeiten (MFI bei 360°C) der Legierungen denen des teilkristallinen Polyaryletherketones allein überlegen sind.

Tabelle 2: Fließfähigkeiten

| PEK I [Gew.%] | PEK V [Gew.%] | PAE I [Gew.%] | MFI [g/10 min] |
|---|---|---|---|
| 100 | 0 | 0 | 10 |
| 80 | 10 | 10 | 21 |
| 60 | 20 | 20 | 45 |

Beispiel 3:

Im Meßextruder wurden unter Inertgas (Argon) das teilkristalline Polyaryletherketon III, das amorphe Polyaryletherketon V und der Polyarylester I in unterschiedlichen Gewichtsverhältnissen gemeinsam zu Strängen extrudiert und granuliert. Die erhaltenen Granulate wurden nach Trocknung für MFI-Messungen verwendet. Tabelle 3 zeigt, daß die Fließfähigkeiten (MFI bei 400°C) der Legierungen denen des teilkristallinen Polyaryletherketones alleine überlegen sind.

Tabelle 3: Fließfähigkeiten

| PEK III [Gew.%] | PEK V [Gew.%] | PAE I [Gew.%] | MFI [g/10 min] |
|---|---|---|---|
| 100 | 0 | 0 | 5 |
| 80 | 10 | 10 | 10 |
| 70 | 15 | 15 | 15 |
| 60 | 10 | 30 | 24 |
| 60 | 30 | 10 | 24 |

Beispiel 4:

Im Meßextruder wurden unter Inertgas (Argon) das teilkristalline Polyaryletherketon III, das amorphe Polyaryletherketon V und der Polyarylester II in unterschiedlichen Gewichtsverhältnissen gemeinsam zu Strängen extrudiert und granuliert. Die erhaltenen Granulate wurden nach Trocknung für MFI-Messungen verwendet. Tabelle 4 zeigt, daß die Fließfähigkeiten (MFI bei 400°C) der Legierungen denen des teilkristallinen Polyaryletherketons allein überlegen sind.

Tabelle 4: Fließfähigkeiten

| PEK III [Gew.%] | PEK V [Gew.%] | PAE II [Gew.%] | MFI [g/10 min] |
|---|---|---|---|
| 100 | 0 | 0 | 5 |
| 80 | 10 | 10 | 15 |
| 70 | 15 | 15 | 25 |

Beispiel 5:

Im Meßextruder wurden unter Inertgas (Argon) das teilkristalline Polyaryletherketon IV, das amorphe Polyaryletherketon V und der Polyarylester I in unterschiedlichen Gewichtsverhältnissen gemeinsam zu Strängen extrudiert und granuliert. Die erhaltenen Granulate wurden nach Trocknung für MFI-Messungen verwendet. Tabelle 5 zeigt, daß die Fließfähigkeiten (MFI bei 400°C) der Legierungen denen des teilkristallinen Polyaryletherketons allein überlegen sind.

Tabelle 5: Fließfähigkeiten

| PEK IV [Gew.%] | PEK V [Gew.%] | PAE I [Gew.%] | MFI [g/10 min] |
|---|---|---|---|
| 100 | 0 | 0 | 40 |
| 80 | 10 | 10 | 60 |
| 70 | 15 | 15 | 70 |

Beispiel 6:

Im Meßextruder wurden unter Inertgas (Argon) die teilkristallinen Polyaryletherketone II und III, das amorphe Polyaryletherketon V und der Polyarylester I in unterschiedlichen Gewichtsverhältnissen gemeinsam zu Strängen extrudiert und granuliert. Die erhaltenen Granulate wurden nach Trocknung zu Zugstäben und Schlagstäben spritzgegossen. Die Tabelle 6 zeigt, daß die mechanischen Eigenschaften der Legierungen mit denen der Polyaryletherketone allein vergleichbar sind.

Tabelle 6: Mechanische Eigenschaften:

| PEK II [Gew.%] | PEK III [Gew.%] | PEK V [Gew.%] | PAE I [Gew.%] | Modul [GPa] | Streck-spannung [MPa] | Reiß-dehnung [%] | Kerbschlag-energie [mJ] |
|---|---|---|---|---|---|---|---|
| 100 | 0 | 0 | 0 | 3,1 | 90 | 17 | 105 |
| 80 | 0 | 10 | 10 | 3,0 | 90 | 15 | 100 |
| 0 | 100 | 0 | 0 | 3,4 | 105 | 10 | 110 |
| 0 | 80 | 10 | 10 | 3,4 | 100 | 11 | 100 |

Beispiel 7:

Im Meßextruder wurden unter Inertgas (Argon) das teilkristalline Polyaryletherketon IV, das amorphe Polyaryletherketon V und der Polyarylester I in unterschiedlichen Gewichtsverhältnissen gemeinsam zu Folien extrudiert. Die Walzen der Folienabzugsvorrichtung wurden auf 20°C temperiert. Daher waren die resultierenden Folien transparent, da die Kristallisation des Polyesterketons weitgehend unterdrückt wurde. Die Tabelle 7 zeigt, daß die mechanischen Eigenschaften der Legierungen mit denen der Polyaryletherketone allein vergleichbar sind.

Tabelle 7: Mechanische Eigenschaften von Folien

| PEK IV [Gew.%] | PEK V [Gew.%] | PAE I [Gew.%] | Modul [GPa] | Streck-spannung [MPa] | Reiß-dehnung [%] |
|---|---|---|---|---|---|
| 100 | 0 | 0 | 3,0 | 70 | 120 |
| 80 | 10 | 10 | 2,8 | 70 | 120 |

**Patentansprüche**

1. Polymerlegierung enthaltend drei Komponenten (a), (b) und (c), dadurch gekennzeichnet, daß (a) mindestens ein teilkristallines Polyaryletherketon, (b) mindestens ein amorphes Polyaryletherketon, und (c) mindestens ein Polyarylester ist, wobei der Staudingerindex von (a), (b) und (c) 0,2 bis 2,0 dl/g und der Anteil der Komponenten (a) 60 bis 96, (b) 35 bis 2. und (c) 35 bis 2 Gewichtsprozent, bezogen auf die Summe von (a), (b) und (c) beträgt.

2. Polymerlegierung nach Anspruch 1, dadurch gekennzeichnet, daß der Anteil der Komponente (a) 70 bis 90, der Komponente (b) 25 bis 5 und der Komponente (c) 25 bis 5 Gewichtsprozent beträgt.

3. Polymerlegierung nach Anspruch 2, dadurch gekennzeichnet, daß der Anteil der Komponente (a) 75 bis 85, der Komponente (b) 20 bis 5 und der Komponente (c) 20 bis 5 Gewichtsprozent beträgt.

4. Polymerlegierung nach Anspruch 1, dadurch gekennzeichnet, daß die Komponente (a) eine oder mehrere Wiederholeinheiten der folgenden Formeln enthält:

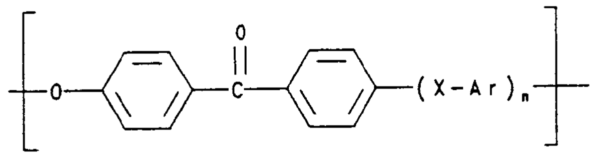

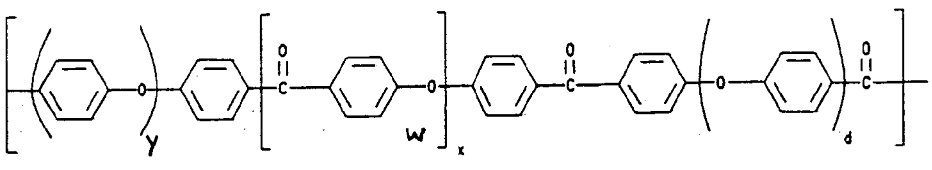

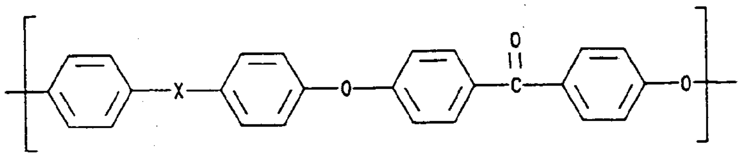

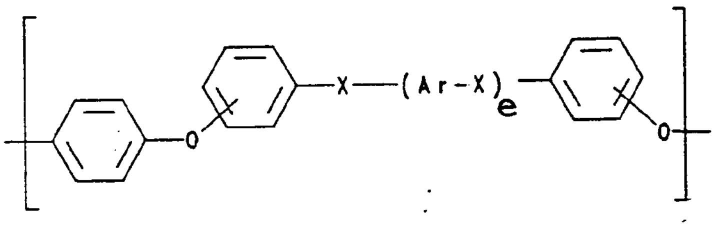

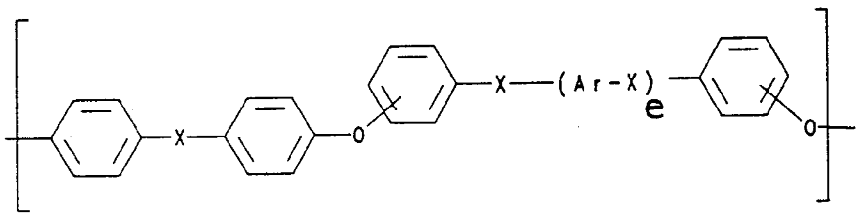

worin -Ar- einen zweiwertigen aromatischen Rest darstellt, ausgewählt aus Phenylen, Biphenylen oder Naphthylen, -X- für O, CO oder eine direkte Bindung steht, n eine ganze Zahl von Null bis 3 ist, w, x, d und e Null oder 1 sind und v eine ganze Zahl von 1 bis 4 ist, wobei d bevorzugt Null ist, falls b gleich 1 ist.

5. Polymerlegierung nach Anspruch 4, dadurch gekennzeichnet, daß die Komponente (a) Wiederholeinheiten der folgenden Formeln aufweist:

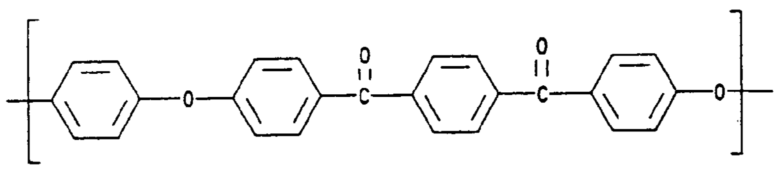

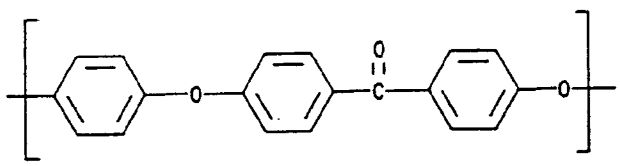

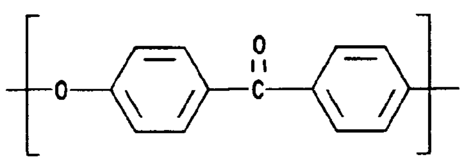

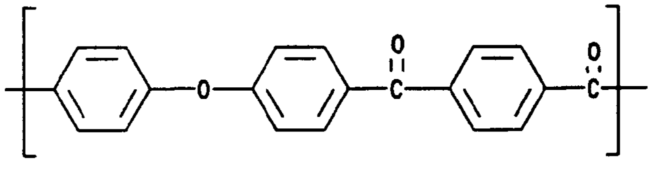

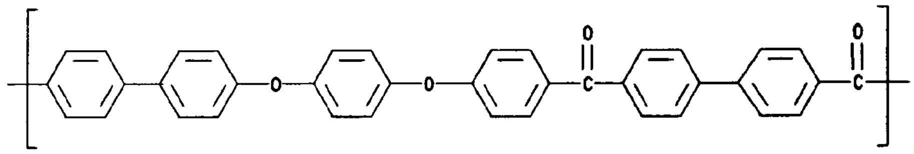

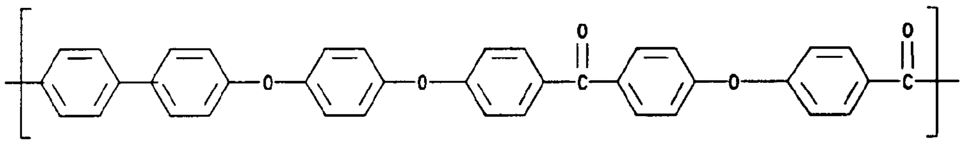

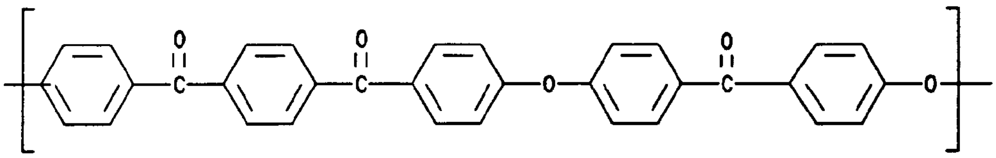

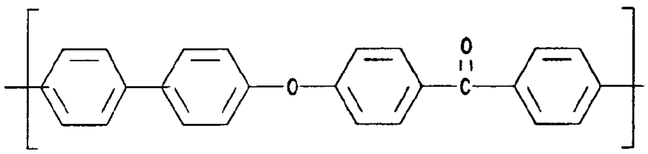

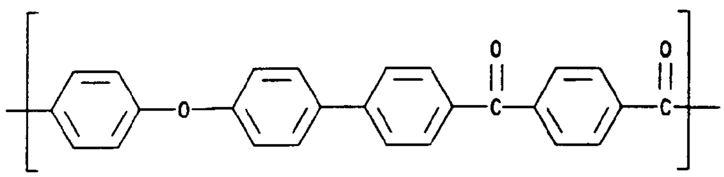

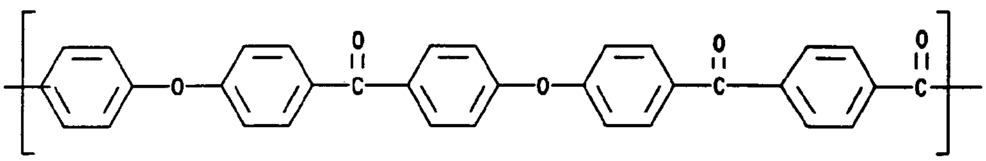

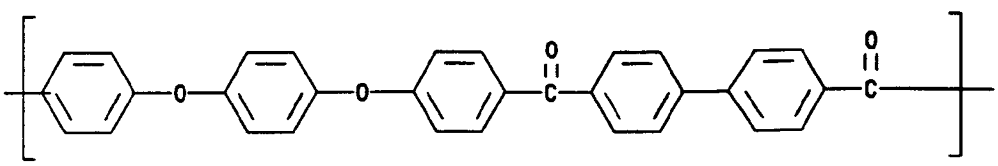

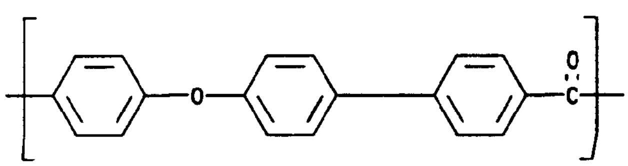

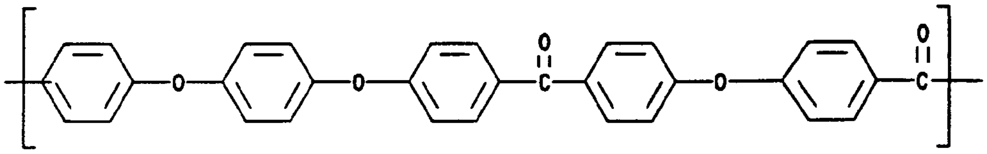

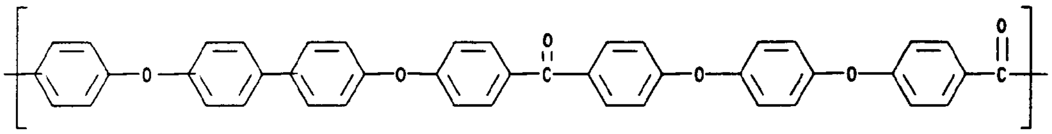

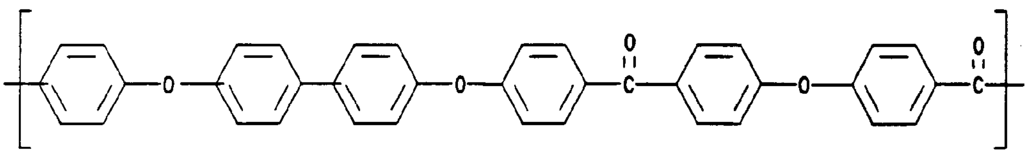

6. Polymerlegierung nach Anspruch 5, dadurch gekennzeichnet, daß die Komponente (a) Wiederholeinheiten einer der folgenden Formeln enthält:

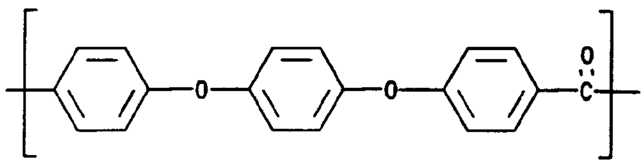

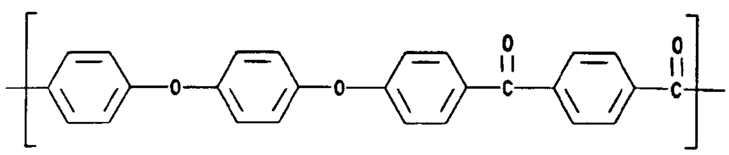

7. Polymerlegierung nach Anspruch 1, dadurch gekennzeichnet, daß die Komponente (b) aus Wiederholeinheiten der Formel I

$$\{O - A - O - B\} \qquad (I)$$

aufgebaut ist,
wobei -A- ausgewählt ist aus den Resten

A1

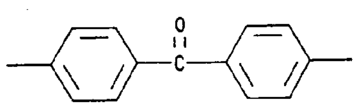

A2

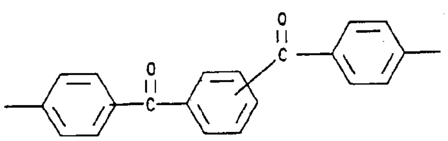

(meta- oder para-Substitution)

A3

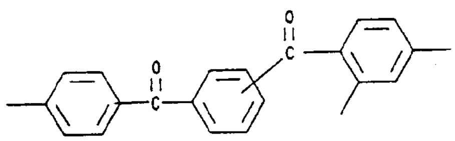

(meta- oder para-Substitution)

und -B- ausgewählt ist aus den Resten

B1

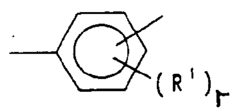

B2

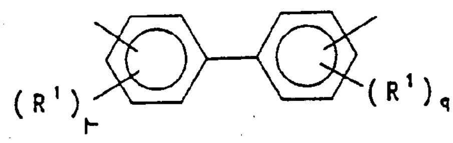

B3

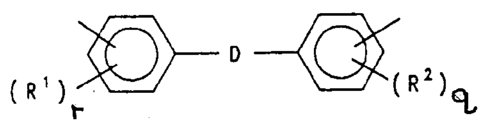

B4

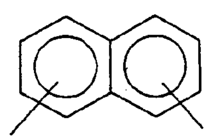

B5

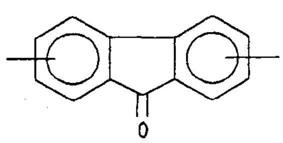

B6

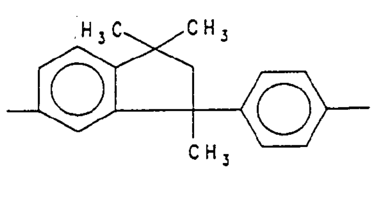

B7

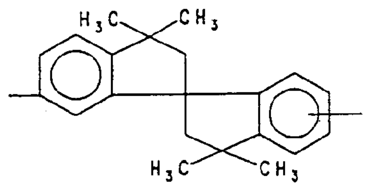

B8

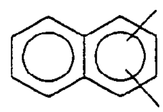

worin $R^1$ und $R^2$ gleich oder verschieden sind und Halogen wie F, Cl, Br oder J, $C_1$-$C_8$-Alkyl oder $C_1$-$C_8$-Alkoxy, darstellen, q und r gleich oder verschieden sind und Null oder eine ganze Zahl von 1 bis 4, bedeuten und D ausgewählt ist aus den zweiwertigen Resten:

D1 -O-,
D2 $>C = 0$
D3 $-CH_2-$,
D4 $-C(CH_3)_2-$,
D5 $-C(CF_3)_2-$,
D6

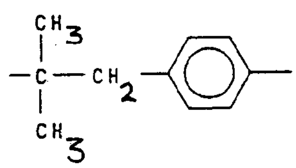

D7

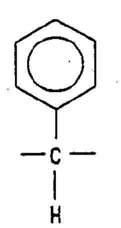

D8

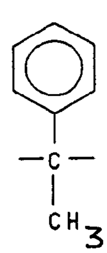

D9

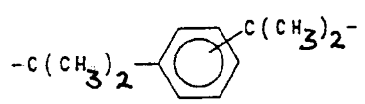

(meta- oder para-Substitution)

D10

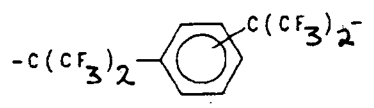

(meta- oder para-Substitution)

8. Polymerlegierung nach Anspruch 7, dadurch gekennzeichnet, daß -A- ausgewählt ist aus A1 und A2, und -B- ausgewählt ist aus B1, B2 und B3 und -D- die Bedeutung hat von D4, D5, D9 und/oder D10.

9. Polymerlegierung nach Anspruch 8, dadurch gekennzeichnet, daß die Komponente (b) Wiederholeinheiten der folgenden Formel aufweist:

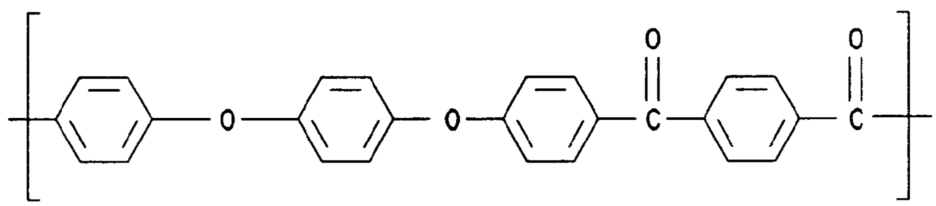

10. Polymerlegierung nach Anspruch 1, dadurch gekennzeichnet, daß die Komponente (c) Struktureinheiten enthält, die abgeleitet sind von mindestens einer Dihydroxyarylverbindung der allgemeinen Formel II

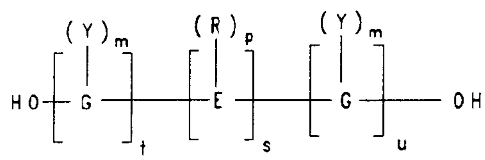

(II)

und mindestens einer Dicarbonsäure der allgemeinen Formel III

HOOC - R″ - COOH (III)

oder deren reaktiven Derivaten worin die Symbole folgende Bedeutung haben:

-G- = aromatische Gruppe
-E- = Alkylen, Alkyliden, eine cycloaliphatische Gruppe, eine Sulfidgruppe, eine Sulfoxidgruppe, eine Sulfongruppe, eine Ethergruppe, eine Carbonylgruppe oder zwei oder mehrere Alkylen- oder Alkylidengruppen verbunden durch eine Gruppe, die weder Alkylen noch Alkyliden ist,
-R- = Wasserstoff, $C_1$-$C_4$-Alkyl, $C_6$-$C_{12}$-Aryl oder eine cycloaliphatische Gruppe
-Y = -R, Halogen oder $-NO_2$
s,t,u = unabhängig voneinander Null oder 1, wobei die Summe aus s, t und u größer als Null ist
m, p = unabhängig voneinander Null oder eine ganze Zahl, die so groß ist wie die maximal mögliche Zahl der Substituenten, die A oder E tragen können,
-R″-

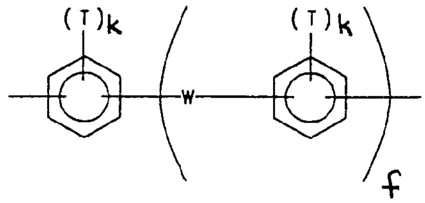

oder

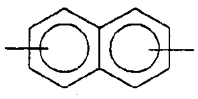

oder

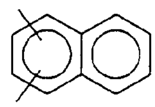

f = Null oder 1
-W- = -O-, $-SO_2-$, -CO-, $-C(CH_3)_2-$, $-CH_2-$, -S- oder

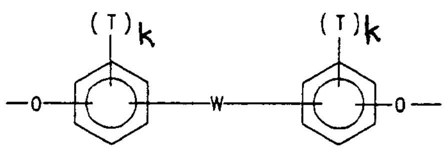

-T = $C_1$-$C_6$-Alkyl oder Halogen,
k = Null, 1, 2, 3 oder 4.

11. Polymerlegierung nach Anspruch 10, dadurch gekennzeichnet, daß die Komponente (c) ein Polyestercarbonat ist, enthaltend neben Struktureinheiten abgeleitet von Formel II und III, weitere Struktureinheiten abgeleitet von Carbonatprecursoren, wobei wenigstens einige der Carboxylgruppen und wenigstens einige der Carbonatgruppen direkt mit den Ringkohlenstoffatomen verbunden sind.

12. Polymerlegierung nach Anspruch 10, dadurch gekennzeichnet, daß die Komponente (c) Wiederholeinheiten der folgenden Formeln aufweist:

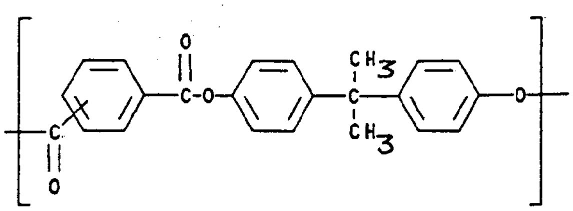

oder

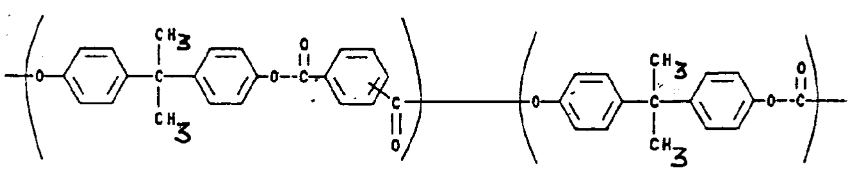

13. Polymerlegierung nach Anspruch 1, dadurch gekennzeichnet, daß die Komponente (a) Wiederholeinheiten der folgenden Formel

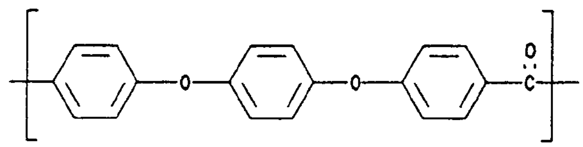

aufweist, die Komponente (b) Wiederholeinheiten der folgenden Formel

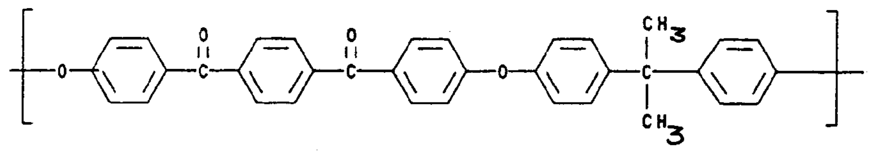

aufweist und die Komponente (c) Wiederholeinheiten der folgenden Formel

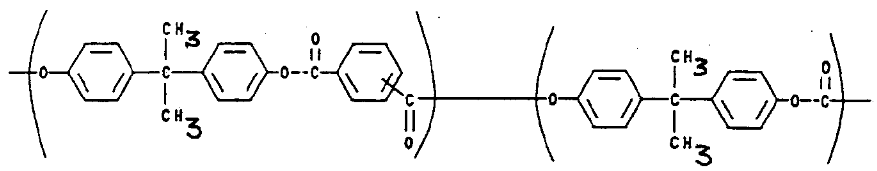

aufweist.

**14.** Polymerlegierung nach Anspruch 1, dadurch gekennzeichnet, daß die Komponente (a) Wiederholeinheiten der folgenden Formel

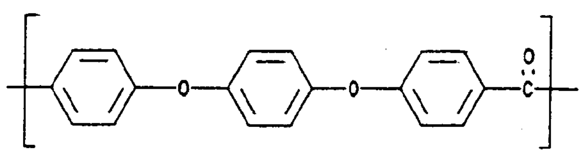

aufweist, die Komponente (b) Wiederholeinheiten der folgenden Formel

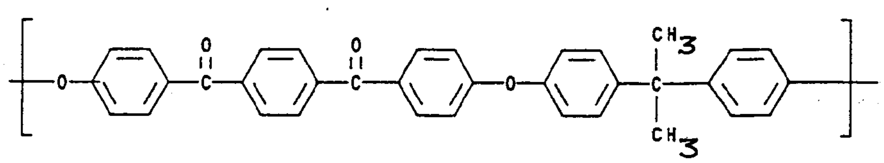

aufweist und die Komponente (c) Wiederholeinheiten der folgenden Formel

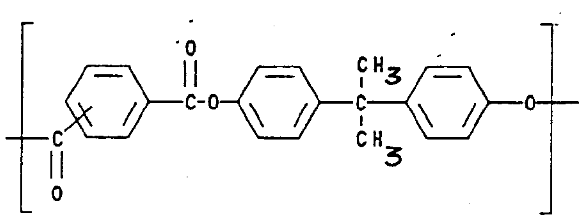

aufweist.

**15.** Polymerlegierung nach Anspruch 1, dadurch gekennzeichnet, daß die Komponente (a) Wiederholeinhei-

ten der folgenden Formel

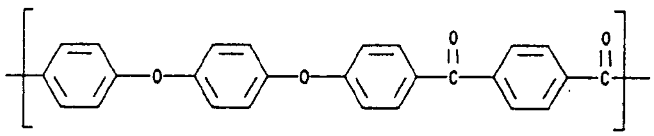

aufweist, die Komponente (b) Wiederholeinheiten der folgenden Formel

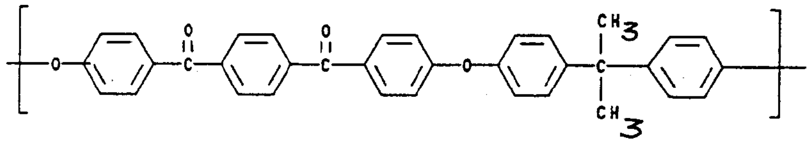

aufweist und die Komponente (c) Wiederholeinheiten der folgenden Formel

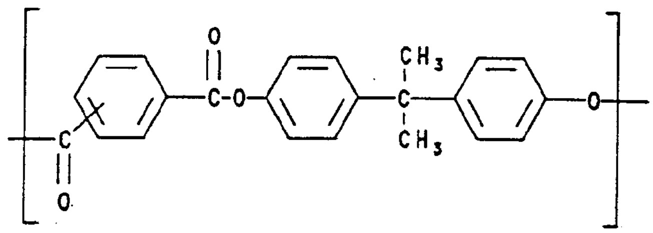

aufweist.

**16.** Polymerlegierung nach Anspruch 1, dadurch gekennzeichnet daß die Komponente (a) Wiederholeinheiten der folgenden Formel

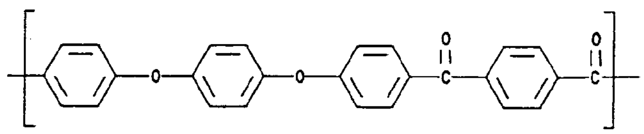

die Komponente (b) Wiederholeinheiten der folgenden Formel

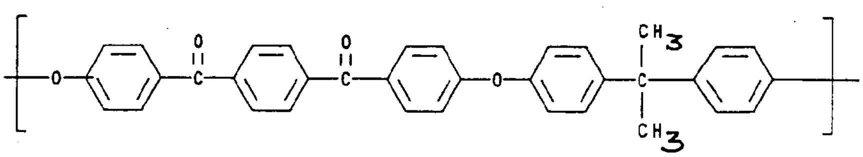

aufweist und die Komponente (c) Wiederholeinheiten der folgenden Formel

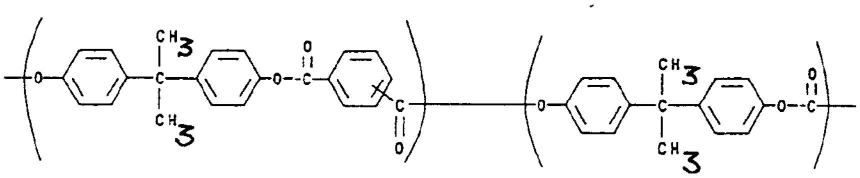

aufweist.

**17.** Polymerlegierung nach Anspruch 1, dadurch gekennzeichnet, daß sie zwei Komponenten (a) mit Wieder-

holeinheiten der folgenden Formeln

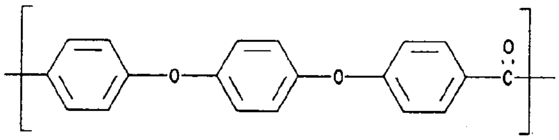

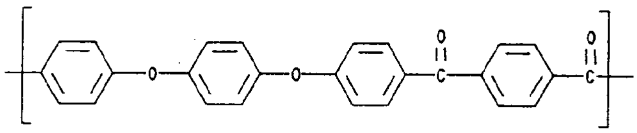

,

eine Komponente (b) mit Wiederholeinheiten der folgenden Formel

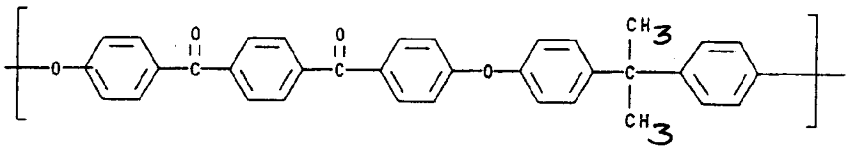

und eine Komponente (c) mit Wiederholeinheiten der folgenden Formel

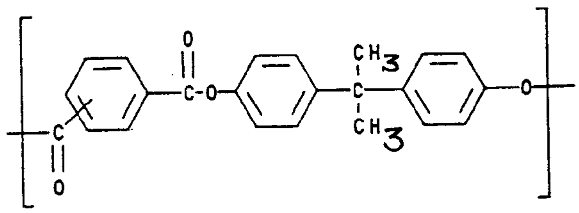

enthält.

**18.** Verwendung einer Legierung nach Anspruch 1 zur Herstellung von Formkörpern oder als Matrixmaterial für Composites.